# EUROPÄISCHE PATENTSCHRIFT

(11) **EP 1 249 304 B1**
(45) Veröffentlichungstag und Bekanntmachung des Hinweises auf die Patenterteilung: **07.01.2004**
(21) Anmeldenummer: 02006032.3
(22) Anmeldetag: 16.03.2002
(51) Int. Cl.: B23K 37/04, B23K 26/02, B23K 26/10, B23K 26/24

(54) **Mitlaufende Andrückvorrichtung zum Aufeinanderspannen zweier oder mehrerer Bleche**
Movable pressing device for pressing at least two superposed metal plates
Dispositif presseur déplaçable pour presser au moins deux tôles superposées

(30) Priorität: 02.04.2001 DE 10116402; 10.07.2001 DE 10133522; 04.12.2001 DE 10159459
(43) Veröffentlichungstag der Anmeldung: 16.10.2002
(73) Patentinhaber: ThyssenKrupp Drauz GmbH, 74076 Heilbronn (DE)
(72) Erfinder: Möckel, Andreas, 08058 Zwickau (DE); Jucht, Horst, 09337 Hohenstein-Ernstthal (DE); Rohland, Jörg, 09119 Chemnitz (DE)
(74) Vertreter: Findeisen, Andreas

(56) Entgegenhaltungen:
- DE-A- 4 207 016
- DE-U- 8 900 556
- DE-U- 20 105 725
- US-A- 4 144 888
- US-A- 5 565 120
- US-A- 6 060 681
- US-A1- 2001 047 983

## Beschreibung

Die Erfindung betrifft eine mitlaufende Andrückvorrichtung zum Aufeinanderspannen zweier oder mehrerer Bleche mit flanschähnlichen Querschnitten für das Verschweißen mittels Hochenergie-Schweißstrahl gemäß dem Oberbegriff des Anspruchs 1 (siehe, z.B., DE-A-4 207 016).

Bei bekannten mitlaufenden Andrückvorrichtungen zum Aufeinanderspannen von Blechen sind am Brenner eines Schweißgerätes zwei Stützen befestigt. Die eine Stütze endet oberhalb der zu spannenden Bleche und trägt auf einem waagerechten Bolzen eine frei drehbare Andrückrolle. Die Kontaktfläche der Andrückrolle am zu spannenden Blech liegt unmittelbar neben der Schweißstelle. Die zweite Stütze ragt bis unterhalb der zu spannenden Bleche und trägt in gleicher Art eine Andrückrolle wie die erste Stütze. Deren Kontaktfläche am zu spannenden Blech liegt deckungsgleich zur Kontaktfläche der oberen Andrückrolle. Entweder die obere oder die untere Andrückrolle wird mit der gewünschten Spannkraft belastet (DE G 89 00 556.2 U1).
Diese Lösung ist zum Verschweißen ebener Bleche geeignet. Beim Verschweißen von Blechen mit flanchähnlichen winkligen Querschnitten muss der Schweißstrahl zwischen den senkrechten Schenkel des zu verschweißenden Bleches und die Stirnseite der Andrückrolle gebracht werden. Das führt zu einem großen Abstand der Kontaktflächen der Andrückrollen vom senkrechten Schenkel des zu verschweißenden Bleches und damit zu einem ungenügenden Spannergebnis. Dadurch werden insbesondere bei der Verwendung von hochenergetischen Schweißverfahren, wie Laser oder Elektronenstrahl, unbefriedigende Schweißnähte erzielt. Beim Verschweißen von beschichteten Blechen kann die verdampfende Beschichtung nicht entweichen. Somit sind dafür die bekannten Andrückvorrichtungen nicht geeignet.
Schließlich ist durch die Andrückrolle die wirtschaftliche Herstellung einer Schutzgaszone an der Schweißnaht unmöglich.

Zum Verschweißen von Blechen mit flanschähnlichen winkligen Querschnitten ist eine Laserschweißvorrichtung mit beweglich gelagertem Fokussierkopf bekannt. Dieser ist mit einer Klemmanordnung zum Zusammenpressen der miteinander zu verbindenden Werkstücke versehen. Die Klemmanordnung besteht aus zwei unter einem Winkel zueinander angeordneten, drehbeweglich gelagerten Ringen, deren Außenwände sich auf den miteinander zu verbindenden Werkstücken abstützen und deren Innenränder mit Flanschen versehen sind, die sich auf mehreren Rollen abstützen. Die Rollen eines jeden Ringes sind auf Achsen gelagert, die sich jeweils auf einem Tragarm abstützen. Die Tragarme sind schwenkbar zwischen den Ringen angeordnet und an ihren freien Enden mit einem spreizenden Bauteil verbunden (DE 42 07 016 A1).
Diese Klemmanordnung ermöglicht es, bei Blechen mit flanschähnlichen winkligen Querschnitten den Laserstrahl nahe zu den senkrechten Schenkeln der Bleche zu führen. Durch die Lagerung der Ringe besteht jedoch keine Möglichkeit, Maßnahmen zur Entgasung der Schweißnaht an der Schweißstelle durchzuführen. Dadurch sind u.a. beschichtete Bleche mit dieser Klemmanordnung nicht qualitätsgerecht zu verschweißen.
Die DE 201 05 725 U 1 betrifft auch eine mitlaufende Andrückvorrichtung zum Aufeinanderspannen zweier oder mehrerer Bleche. Dieses Gebrauchsmuster ist eine Zwischenliteratur und nur als Stand der Technik gegenüber den Ansprüchen 8 bis 12 vorveröffentlicht. Die im Gebrauchsmuster beschriebenen Merkmale zum Entgasen der Schweißnaht sind nur für Schweißnähte geeignet, die zwei Bleche verbinden. Die Schweißnaht von drei oder mehr Blechen lässt sich so nicht entgasen.

Es ist Aufgabe der Erfindung, gattungsgemäße mitlaufende Andrückvorrichtungen zum Aufeinanderspannen zweier oder mehrerer Bleche dahingehend zu verbessern, dass ein Aufeinanderspannen von zwei oder mehreren Blechen mit flanschähnlichen Querschnitten sehr nahe der senkrechten Wände erfolgt und der Schweißstrahl auf die freie Fläche der flanschähnlichen Querschnittes gerichtet ist. Dadurch sollen Voraussetzungen für das Entweichen der beim Schweißen verdampfenden Blechbeschichtungen geschaffen werden können. Weiterhin soll eine wirtschaftliche Herstellung einer Schutzgaszone erreicht werden.

Erfindungsgemäß wird die Aufgabe durch die Merkmale des Patentanspruches 1 gelöst. Die Merkmale der Patentansprüche 2 bis 12 sind vorteilhafte Ausgestaltungen.
Durch die Verwendung einer schräggestellten, an der Schweißoptik des Schweißgerätes frei drehbaren Hülse als Andrückelement wird der Schweißstrahl durch den Innenraum der Hülse geführt und so geneigt, dass er nahe der inneren Mantelfläche der Hülse aus dieser austritt. Dadurch kann die Kontaktfläche der Hülse mit dem zu spannenden Blech sehr nahe an die senkrechte Wand des Blechprofiles gelegt werden. Ebenfalls dadurch ist der Schweißstrahl und die durch ihn erzeugte Schweißnaht sehr nahe zur senkrechten Wand des Blechprofiles verschoben. Die flanschähnlichen Blechprofilteile können dadurch in ihrer Breite erheblich reduziert sein. Durch die Einleitung des Schutzgases in die Hülse wird an der Schweißstelle eine homogene Schutzgaszone erzielt. Die Anordnung der Kontaktfläche der Hülse nahe der senkrechten Wand des Blechprofiles macht die äußeren Kanten der flanschähnlichen Blechprofilteile während des Schweißvorganges zugängig. Dadurch kann eine Messerrolle angeordnet werden, deren Schneide die Kanten keilförmig auseinanderdrückt und dadurch die Entgasung der Schweißnaht vom verdampften Beschichtungsmaterial ermöglicht. Durch eine Messerrolle oder einen Schneiderträger mit zwei Schneiden ist auch die Entgasung bei einer Dreiblechschweißung gelöst. Die mitlaufende Andrückvorrichtung ist für unterschiedliche Blechprofile vielseitig verwendbar. Die Bleche können auf einer festen Unterlage aufgelegt werden. Durch die Verwendung einer Rolle oder Hülse an einem Ausleger wird mit dieser gegengehalten und es können freistehende Blechprofile, wie zum Beispiel Kraftfahrzeugkarosserien verschweißt werden.

Als Schweißverfahren sind insbesondere Hochenergieverfahren wie Laser oder Elektronenstrahl vorteilhaft anwendbar.

In den Zeichnungen ist die Erfindung an drei Ausführungsbeispielen erläutert.
Es zeigen
- Fig.: 1 eine Andrückvorrichtung mit fester Auflage,
- Fig.2: eine Andrückvorrichtung mit Ausleger und Rolle,
- Fig.3: eine Andrückvorrichtung mit Ausleger und Hülse sowie Messerrolle,
- Fig.4: eine Andrückvorrichtung mit Ausleger und Hülse sowie Messerrolle mit zwei Schneiden und
- Fig.5: eine Andrückvorrichtung mit Ausleger und Hülse sowie feststehendem Messerträger mit zwei Schneiden

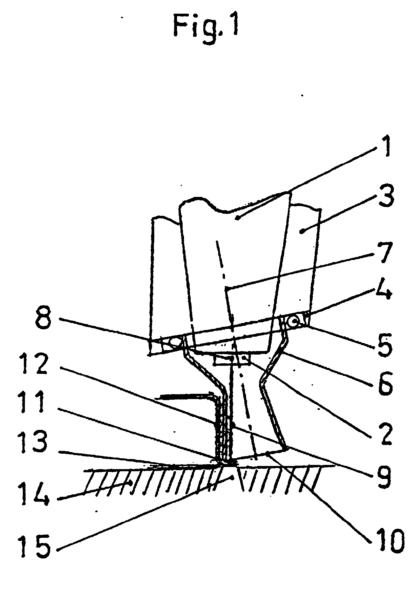

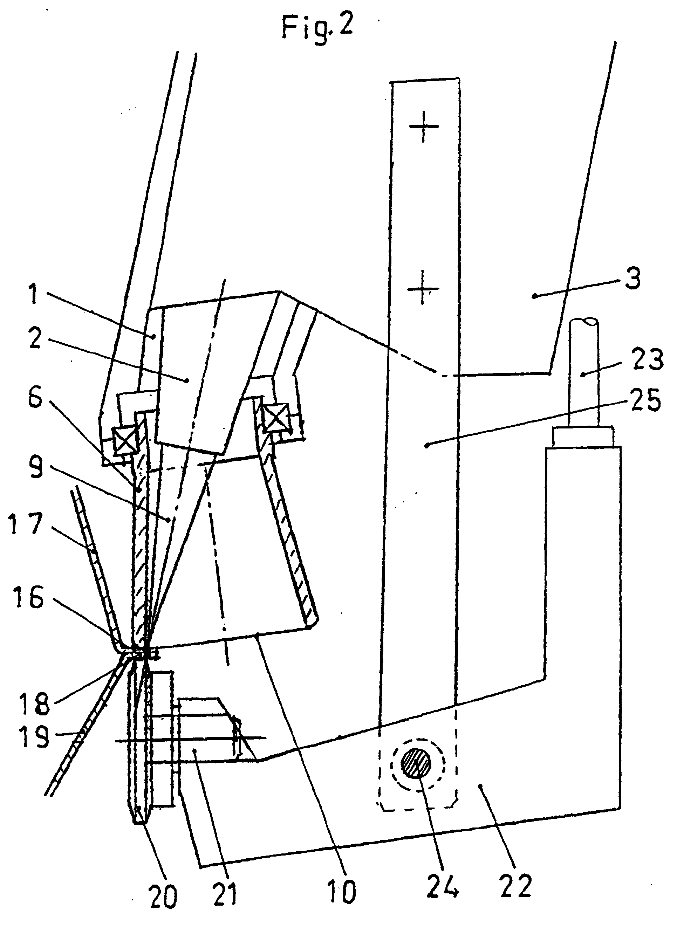

Die Andrückvorrichtungen nach Fig.1 und 2 sind keine Ausführungsbeispiele der Erfindung. Sie sind Beispiele zur Erleichterung des Verständnisses der Erfindung.

Am Gehäuse 1 einer Schweißoptik 2 eines nicht dargestellten Schweißgerätes ist eine Platte 3 befestigt, die ein Lagergehäuse 4 eines Wälzlagers 5 trägt (Fig.1). In der Bohrung des Wälzlagers 5 ist eine konisch geformte Hülse 6 geklemmt. Das Lagergehäuse 4 des Wälzlagers 5 ist so schräg auf der Platte 3 angebracht, dass die Drehachse 7 des Wälzlagers 5 die Achse 8 des aus der Schweißoptik 2 austretenden Schweißstrahles 9 unter einem Winkel von 10 - 20 Grad schneidet. Die freie Stirnseite 10 der Hülse 6 liegt somit mit einem gleichgroßen Freiwinkel von 10 - 20 Grad auf die ebene Flanschfläche 11 des oberen zu verschweißenden winkligen Werkstückes 12 auf. Bündig mit der freien Kante der Flanschfläche 11 liegt darunter ein ebenes Blech 13 auf einer stationären Auflage 14. Diese ist unterhalb der Schweißstelle mit einem Durchbruch 15 versehen. Der Kegelwinkel des Konus der Hülse 6 ist so gewählt, dass die zum Werkstück 12 zeigende Mantelfläche des Konus der Hülse 6 senkrecht verläuft. Die freie Stirnseite 10 der Hülse 6 ist, im Querschnitt gesehen, ballig geformt, wodurch die Stirnseite 10 punktförmig auf dem Werkstück 12 aufliegt.
Da die Hülse 6 die Schweißoptik 2 umschließt, verläuft der Schweißstrahl 9 innerhalb der Hülse 6. Er ist so eingestellt, dass er an der freien Stirnseite 10 der Hülse 6 sehr nahe der inneren Mantelfläche der Hülse 6 aus dieser austritt und dort auf die Oberfläche des Werkstückes 12 auftrifft. Da zwischen Schweißstrahl 9 und dem senkrechten Schenkel des winkligen Werkstückes 12 nur die Hülse 6 mit ihrer geringen Wandstärke angeordnet ist, kann die Schweißnaht auf der Flanschfläche 11 sehr nahe zum senkrechten Schenkel des winkligen Werkstückes 12 ausgeführt werden. Da das Gehäuse 1 der Schweißoptik 2 durch den Arm eines nicht dargestellten Roboters bewegt wird, drückt dieser die freie Stirnseite 10 der Hülse 6 gegen die Flanschfläche 11 des Werkstückes 12 und wälzt die Stirnseite 10 bei der Vorschubbewegung auf dem Werkstück 12 ab. Dadurch werden immer an der Schweißstelle die zu verschweißenden Werkstücke 12; 13 mit dem gewünschten Druck zusammengedrückt. Damit sind die geometrischen Voraussetzungen für eine qualitativ hochwertige Schweißnaht geschaffen, die eine minimale Flanschbreite benötigt.
In Fig.2 ist eine Andrückvorrichtung dargestellt, die für Blechprofile vorteilhaft ist, die nicht gegen eine feste Unterlage 15 gedrückt werden können. Es handelt sich dabei vorzugsweise um Blechprofile, die frei im Raum gehalten und so verschweißt werden. Das könnten beispielsweise Rohbaukarosserien für Kraftfahrzeuge sein.
Bei dieser Andrückvorrichtung ist in gleicher Art wie in Fig. 1 am Gehäuse 1 der Schweißoptik 2 eine konisch geformte Hülse 6 gelagert, deren freie Stirnseite 10 auf die Flanschfläche 16 des oberen Werkstückes aufliegt. Gegen die Flanschfläche 18 des unteren Werkstückes 19 ist gegenüber der Anlagestelle der Hülse 6 eine frei drehbar gelagerte Rolle 20 angelegt. Diese Rolle 20 ist drehbar auf einem Bolzen 21 gelagert, der am Ende eines Armes eines doppelarmigen Hebels 22 befestigt ist. Am Ende des anderen Armes des doppelarmigen Hebels 22 ist die Kolbenstange 23 eines nicht dargestellten pneumatischen Arbeitszylinders angelenkt. Etwa in der Mitte des doppelarmigen Hebels 22 ist dieser um einen Bolzen 24 schwenkbar am Ende eines an der Platte 3 befestigten Auslegers 25 gelagert. Um die Andrückeinrichtung mit den Flanschen 16;18 der Werkstücke 17;19 in Kontakt zu bringen, wird die Rolle 20 durch den pneumatischen Arbeitszylinder nach unten geschwenkt. Durch programmierte Roboterbewegungen wird danach die Schweißoptik 2 mit der sie umschließenden Hülse 6 in Arbeitsposition gebracht. Nach Erreichen der Arbeitsposition schwenkt der Arbeitszylinder die Rolle 20 gegen die Flanschfläche 18 des unteren Bleches 19 und drückt die Rolle 20 mit voreingestelltem Druck an. Mit Beginn der Vorschubbewegung der Schweißoptik 2 durch den Roboter erzeugt der nun wirksame Schweißstrahl 9 eine fortlaufende Schweißnaht.

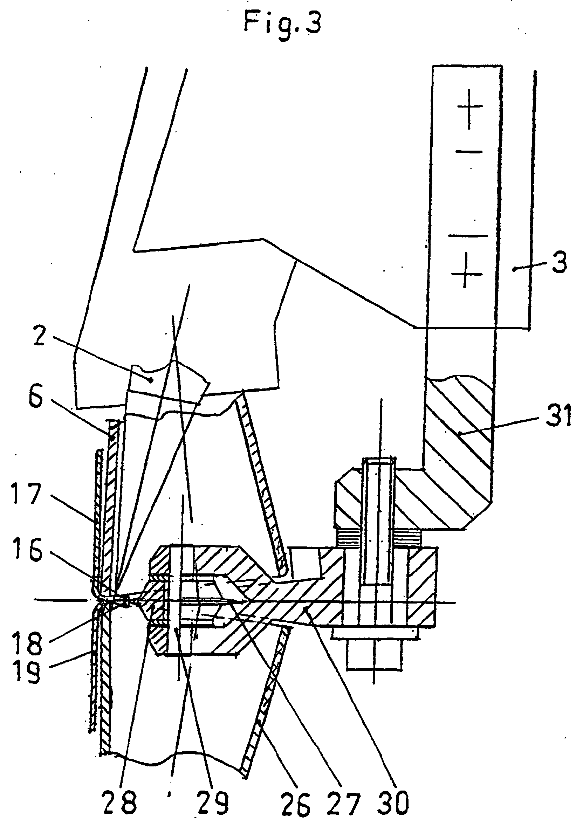

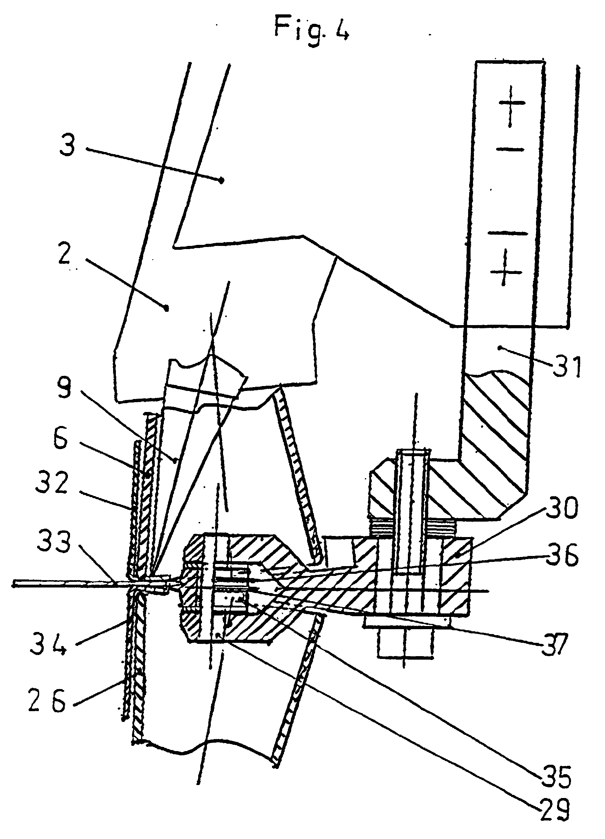

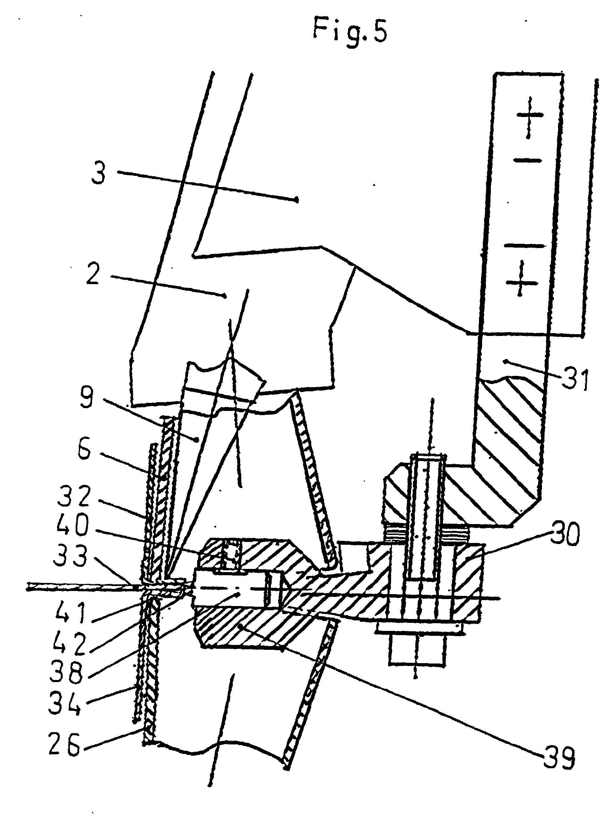

Das Ausführung beispiel der Andrückvorrichtung der Erfindung in Fig.3 ist von der der Fig.2 abgeleitet. An Stelle der Rolle 20 ist eine konisch geformte Hülse 26 am freien Ende des einen Armes des doppelarmigen Hebels 22 in gleicher Weise gelagert wie die konische Hülse 6 an der Schweißoptik 2. In die Hülse 6 der Schweißoptik 2 mündet die nicht dargestellte Zuleitung für Schutzgas. Insbesondere für das Schweißen von beschichteten Blechen ist es erforderlich, die beim Schweißen verdampften Schichten von der Naht abzuführen. Zu diesem Zweck ist im Schweißbereich in der Ebene zwischen den beiden Flanschen 16; 18 der zu verschweißenden Bleche 17;19 eine Schneide 27 einer umlaufenden Messerrolle 28 vorgesehen. Die Messerrolle 28 ist auf einem Bolzen 29 eines gabelförmigen Hebels 30 gelagert. Der Hebel 30 ist federnd an einem Ausleger 31 angelenkt, der an der Platte 3 befestigt ist. Die Federwirkung vermeidet eine Überbestimmung der Schneide 27 der Messerrolle 28. Der kleine Winkel von 5 - 15 Grad an der Schneide 27 dient der Schaffung eines keilförmigen Spaltes zwischen den Flanschen 16;18 der zu verschweißenden Bleche 17;19, um das drucklose Entweichen des dampfförmigen Beschichtungsmaterials zu ermöglichen.
Im Ausführungsbeispiel der Erfindung nach Fig.4 und 5 sind die Flansche dreier Bleche 32;33;34 zu verschweißen. Auf die Oberfläche des oberen und des unteren Flansches drücken die an der Schweißoptik 2 des Schweißgerätes gelagerten Hülsen 6;26 und spannen dadurch die Flansche der drei zu verschweißenden Bleche 32;33;34 an der durch den Laserstrahl 9 gebildeten Schweißstelle zusammen. An dessen freiem Ende des Auslegers 31 ist ein Hebel 30 federnd angelenkt, dessen freies Ende gabelförmig ausgebildet ist und in Richtung auf die freien Flanschenden der zu verschweißenden Bleche 32;33;34 zeigt. In der Gabel des Hebels 30 ist eine Messerrolle 35 auf einem Bolzen 29 frei drehbar gelagert. Auf der Mantelfläche der Messerrolle 35 sind zwei parallel zueinander umlaufende keilförmige Schneiden 36;37 angeordnet, deren Spitzen zueinander etwa den Abstand der Stärke des mittleren Bleches 33 haben. Die Einstellung erfolgt derart, dass die Spitzen der Schneiden 36;37 auf die Fugen zwischen den Flanschen der drei Bleche 32;33;34 gerichtet sind.
An Stelle der Messerrolle 35 ist an gleicher Stelle der Vorrichtung (Fig.5) ein Schneidenträger 38 in eine Aufnahme 39 aufgenommen und dort mittels einer Spannschraube 40 klemmbar. Der Schneidenträger 38 zeigt in Richtung auf die Flanschenden der zu verschweißenden Bleche 32;33;34. An dieser Stirnseite sind zwei Schneiden 41;42 angeordnet, die keilförmig ausgebildet sind, geradlinig und parallel zueinander verlaufen und deren Spitzen zueinander etwa den Abstand der Stärke des mittleren Bleches 33 haben. Die Einstellung erfolgt ebenfalls so, dass die Spitzen der Schneiden 41:42 auf die Fugen zwischen den Flanschen der drei Bleche 32;33;34 gerichtet sind. Die Stirnseiten der Schneiden 41;42 sind stark abgerundet, um ein Verhaken in der Blechoberfläche zu vermeiden. Es hat sich als vorteilhaft erwiesen, den eingeschlossenen Schneidenwinkel zwischen 5 und 15 Grad auszuführen. Dadurch entstehen keilförmige Öffnungen, durch die der beim Schweißvorgang gasförmig verdampfte Beschichtungswerkstoff drucklos austritt. So werden homogene Schweißnähte erzielt.

Die einzelnen Elemente der beschriebenen Ausführungs beispiel der Erfindung können wechselweise miteinander kombiniert werden, um die Andrückvorrichtung an die unterschiedlichen Formen der zu verschweißenden Werkstücke und deren Material anzupassen. Es sind auch unterschiedliche Schweißverfahren wie Laser, Elektronenstrahl oder andere hochenergetische Verfahren anwendbar.

### Aufstellung der Bezugszeichen

- 1: Gehäuse
- 2: Schweißoptik
- 3: Platte
- 4: Lagergehäuse
- 5: Wälzlager
- 6: Hülse
- 7: Drehachse
- 8: Achse
- 9: Schweißstrahl
- 10: freie Stirnseite
- 11: Flanschfläche
- 12: Werkstück
- 13: Blech
- 14: Auflage
- 15: Durchbruch
- 16: Flanschfläche
- 17: oberes Werkstück
- 18: Flanschfläche
- 19: unteres Werkstück
- 20: Rolle
- 21: Bolzen
- 22: doppelarmiger Hebel
- 23: Kolbenstange
- 24: Bolzen
- 25: Ausleger
- 26: Hülse
- 27: Schneide
- 28: Messerrolle
- 29: Bolzen
- 30: Hebel
- 31: Ausleger
- 32: Blech
- 33: Blech
- 34: Blech
- 35: Messerrolle
- 36: Schneide
- 37: Schneide
- 38: Schneidenträger
- 39: Aufnahme
- 40: Spannschraube
- 41: Schneide
- 42: Schneide

## Patentansprüche

1. Mitlaufende Andrückvorrichtung zum Aufeinanderspannen zweier oder mehrerer Bleche mit flanschähnlichen Querschnitten für das Verschweißen mittels Hochenergie-Schweißstrahl, wobei die Andrückvorrichtung aus einem Gehäuse (1) besteht, in dem eine Schweißoptik (2) koaxial angeordnet ist, wobei die Achse der Schweißoptik (2) deckungsgleich mit der Achse (8) des Schweißstrahles (9) ist
**dadurch gekennzeichnet,**
**dass** an einem ersten Ende des Gehäuses (1) eine konisch ausgebildete Hülse (6) um ihre Achse (7) frei drehbar gelagert ist, so dass die Hülse (6) um das Ende des Gehäuses (1) und um die Schweißoptik (2) dreht, wobei die Achse (7) der konisch ausgebildeteten Hülse (6) um einen Winkel zur Achse (7) der Schweißoptik (2) so geneigt ist, dass die Achse (7) der Schweißoptik (2) und mit ihr der Schweißstrahl (9) nahe der inneren Mantelfläche der Hülse (6) aus dieser austritt,
wobei die freie Stirnseite (10) des Konus der Hülse (6) an einer Stelle neben dem Schweißstrahl (9) auf den zu verschweißenden Flansch (11) des Werkstückes (12) aufliegen kann und dass an einer Lagerung (3) der Hülse (6) an der Schweißoptik (2) des Schweißgerätes ein erster Ausleger (31) befestigt ist, an dessen freiem Ende ein Hebel (30) federnd angelenkt ist, dessen freies Ende zur Schweißebene gerichtet und als Lagergabel ausgebildet ist, in der frei drehbar eine Messerrolle (28) gelagert ist, deren Schneide (27) zum Entgasen der Schweißnaht zwischen die Flansche (16;18) der zu verschweißenden Bleche (17;19) drückbar ist.

2. Mitlaufende Andrückvorrichtung nach Anspruch 1,
**dadurch gekennzeichnet,**
**dass** die freie Stirnseite (10) des Konus der Hülse (6) im Querschnitt ballig geformt ist.

3. Mitlaufende Andrückvorrichtung nach den Ansprüchen 1 und 2,
**dadurch gekennzeichnet,**
**dass** die zu verschweißenden Werkstücke (12;13) auf einer festen Unterlage (14) gelagert sind und die an der Schweißoptik (2) des Schweißgerätes frei drehbare Hülse (6) durch Federdruck gegen den zu verschweißenden Flansch (11) gedrückt wird.

4. Mitlaufende Andrückvorrichtung nach den Ansprüchen 1 und 2,
**dadurch gekennzeichnet,**
**dass** an der Lagerung (3) der Hülse (6) an der Schweißoptik (2) des Schweißgerätes ein bis unterhalb der Hülse (6) ragender Ausleger (25) befestigt ist, an dessen freiem Ende ein Schwenkarm (22) so gelagert ist, dass eine an seinem freien Ende frei drehbare Rolle (20) oder eine schräggestellte Hülse (26) sich unter der Andrückstelle der Hülse (6) befindet und der Schwenkarm (22) gegen die Wirkung einer Feder vom Werkstück (19) entfernt oder durch eine Feder an das Werkstück (19) gedrückt wird.

5. Mitlaufende Andrückvorrichtung nach Anspruch 4,
**dadurch gekennzeichnet,**
**dass** am der Rolle (20) oder schräggestellten Hülse (26) gegenüberliegenden Ende des Schwenkarmes (22) ein hydraulischer oder pneumatischer Arbeitszylinder angeordnet ist, der so betätigbar ist, dass er entweder den Schwenkarm (22) vom Werkstück (19) entfernt oder die Rolle (20) oder die schräggestellte Hülse (26) an das Werkstück (19) drückt.

6. Mitlaufende Andrückvorrichtung nach den Ansprüchen 1 bis 5,
**dadurch gekennzeichnet,**
**dass** die Hülsen (6;26) und die Rollen (20) aus einer harten Kupferlegierung bestehen.

7. Mitlaufende Andrückvorrichtung nach den Ansprüchen 1 bis 6,
**dadurch gekennzeichnet,**
**dass** in die Hülse (6) eine Zuleitung für Schutzgas mündet.

8. Mitlaufende Andrückvorrichtung nach den Anspruch 1,
**dadurch gekennzeichnet,**
**dass** bei mehreren Blechen (32;33;34) mit flanschähnlichen Querschnitten, deren freie Enden annähernd gleich lang sind, zwei mit dem Abstand der mittleren Blechstärke (33) angeordnete Schneiden (36;37;41;42) mit dem Schweißstrahl (9) mitgeführt werden und gleichzeitig zwischen die freien Enden der Bleche (32;33;34) eindrückbar sind.

9. Mitlaufende Andrückvorrichtung nach Anspruch 8,
**dadurch gekennzeichnet,**
**dass** die zwei Schneiden als in einer Lagergabel (30) frei drehbar gelagerte Messerrolle (35) ausgebildet sind, die auf ihrer Mantelfläche mit zwei parallel zueinander umlaufenden keilförmigen Schneiden (36;37) versehen ist, deren Spitzen zueinander etwa den Abstand der Stärke des mittleren Bleches (33) haben.

10. Mitlaufende Andrückvorrichtung nach Anspruch 8,
**dadurch gekennzeichnet,**
**dass** die zwei Schneiden als in einer federnd am Ausleger (31) gelagerten Aufnahme (39) klemmbarer Schneidenträger (38) ausgebildet sind, dessen Schneiden (41;42) keilförmig geformt sind, geradlinig und parallel zueinander verlaufen und deren Spitzen zueinander etwa den Abstand der Stärke des mittleren Bleches (33) haben.

11. Mitlaufende Andrückvorrichtung nach den Ansprüchen 8 und 10,
**dadurch gekennzeichnet,**
**dass** die Schneiden (41;42) an ihren Stirnseiten abgerundet sind.

12. Mitlaufende Andrückvorrichtung nach den Ansprüchen 8 bis 11,
**dadurch gekennzeichnet,**
**dass** der eingeschlossene Schneidenwinkel 5 bis 15 Grad beträgt.

## Claims

1. A movable pressing device for pressing two or more metal plates with flange-like cross-sections for welding by means of high-energy welding beam, whereby the pressing device comprises a housing (1), in which a welding lens (2) is arranged coaxially, whereby the axis of the welding lens (2) is flush with the axis (8) of the welding beam (9),
**characterised in that**
on a first end of the housing (1) a conically shaped sleeve (6) is mounted to swivel freely about its axis (7), so that the sleeve (6) rotates about the end of the housing (1) and about the welding lens (2), whereby the axis (7) of the conically shaped sleeve (6) is inclined by an angle to the axis (7) of the welding lens (2), such that the axis (7) of the welding lens (2), and with it the welding beam (9), exits from near the inner mantle surface of the sleeve (6), whereby the free front side (10) of the cone of the sleeve (6) can lie at a point near the welding beam (9) on the flange (11) of the work pieces (12) to be welded, and **in that** mounted on a bearing (3) of the sleeve (6) on the welding lens (2) of the welding apparatus a first jib (31) is fastened, on the free end of which a lever (30) is articulated spring-loaded, whereof the free end is aligned to the welding plane and is designed as a bearing fork, in which a cutting roller (28) is mounted freely rotating, whereof the cutting edge (27) for degassing the weld seam can be pressed between the flange (16; 18) of the sheets (17; 19) to be welded.

2. The movable pressing device as claimed in Claim 1,
**characterised in that**
the free front side (10) of the cone of the sleeve (6) is formed spherically in cross-section.

3. The movable pressing device as claimed in Claims 1 and 2,
**characterised in that**
the work pieces to be welded (12; 13) are supported on a solid substrate (14) and the sleeve (6) pivoting freely on the welding lens (2) of the welding apparatus is pressed by spring loading against the flange (11) to be welded.

4. The movable pressing device as claimed in Claims 1 and 2,
**characterised in that**
fastened on the bearing (3) of the sleeve (6) on the welding lens (2) of the welding apparatus is a jib (25) projecting to below the sleeve (6), at the free end of which a swivel arm (22) is mounted, such that a freely pivoting roller (20) or a tilted sleeve (26) is located on its free end under the pressure point of the sleeve (6), and the swivel arm (22) is distanced against the action of a spring from the work piece (19), or is pressed by a spring onto the work piece (19).

5. The movable pressing device as claimed in Claim 4,
**characterised in that**
a hydraulic or pneumatic working cylinder, which can be actuated such that it either distances the swivel arm (22) from the work piece (19) or presses the roller (20) or the tilted sleeve (26) onto the work piece (19), is arranged on the end of the swivel arm (22) opposite the roller (20) or the tilted sleeve (26).

6. The movable pressing device as claimed in Claims 1 to 5,
**characterised in that**
the sleeves (6; 26) and the rollers (20) consist of a hard copper alloy.

7. The movable pressing device as claimed in Claims 1 to 6,
**characterised in that**
a supply line for inert gas terminates in the sleeve (6).

8. The movable pressing device as claimed in Claim 1,
**characterised in that**
two cutting edges (36; 37; 41; 42) arranged at the distance of the average sheet thickness (33) with the welding beam (9) are carried with several sheets (32; 33; 34) having flange-like cross-sections, whereof the free ends are approximately the same length, and can at the same time be pressed between the free ends of the sheets (32; 33; 34).

9. The movable pressing device as claimed in Claim 8,
**characterised in that**
the two cutting edges are designed as a measuring roller (35) mounted freely in a bearing fork (30), which is provided on its mantle surface with two wedge-shaped cutting edges (36; 37) running parallel to one another, whereof the distance between the tips is approximately the thickness of the average sheet (33).

10. The movable pressing device as claimed in Claim 8,
**characterised in that**
the two cutting edges are designed as a cutting edge support (38) which can be clamped in a recess (39) mounted on the jib (31), whereof the cutting edges (41; 42) are wedge-shaped, run in a straight line and parallel to one another, and whereof the distance between the tips is approximately the thickness of the average sheet (33).

11. The movable pressing device as claimed in Claims 8 and 10,
**characterised in that**
the cutting edges (41; 42) are rounded at their front ends.

12. The movable pressing device as claimed in Claims 8 to 11,
**characterised in that**
the enclosed cutting angle is 5 to 15 degrees.

## Revendications

1. Dispositif presseur déplaçable pour presser au moins deux tôles superposées de sections similaires à une bride pour l'assemblage par soudage au moyen d'un rayonnement à haute tension, ce dispositif presseur étant constitué d'un boîtier (1) dans lequel est disposée de manière coaxiale une optique de soudage (2), l'axe de l'optique de soudage (2) recouvrant l'axe (8) du faisceau de soudage (9),
**caractérisé en ce que**
sur une première extrémité du boîtier (1), un manchon (6) de configuration conique est monté librement pivotant sur son axe (7) de sorte à tourner autour de l'extrémité du boîtier (1) et de l'optique de soudage (2), l'axe (7) du manchon de configuration conique (6) étant incliné selon un angle par rapport à l'axe (7) de l'optique de soudage (2) de telle sorte que l'axe (7) de l'optique de soudage (2) et avec lui, le faisceau de soudage (9) sortent du manchon (6) à proximité de la surface de l'enveloppe intérieure de celui-ci, le côté frontal (10) libre du cône du manchon (6) pouvant s'appuyer sur la bride (11) à souder de la pièce d'oeuvre (12) en un endroit contigu au faisceau de soudage (9), et **en ce qu'**est fixé sur un logement (3) du manchon (6) sur l'optique de soudage (2) du poste de soudure un premier bras (31) sur l'extrémité libre duquel un levier (30) est élastiquement articulé dont l'extrémité libre est tournée vers le plan de soudage et configurée en forme de fourche palier dans laquelle est logé librement pivotant un rouleau à lame (28) dont la lame (27) peut être enfoncée de façon à extraire les gaz du cordon de soudure entre les brides (16 ;18) des tôles (17 ;19) à assembler par soudage.

2. Dispositif presseur déplaçable selon la revendication 1,
**caractérisé en ce que**
le côté frontal (10) libre du cône du manchon (6) est de section convexe.

3. Dispositif presseur déplaçable selon les revendications 1 et 2,
**caractérisé en ce que**
les pièces d'oeuvre (12 ;13) à assembler par soudage sont logées sur une semelle d'appui fixe (14) et le manchon (6) monté librement pivotant sur l'optique de soudage (2) du poste de soudure est pressé sous pression de ressort contre la bride (11) à assembler par soudage.

4. Dispositif presseur déplaçable selon les revendications 1 et 2,
**caractérisé en ce**
**qu'**est fixé sur le logement (3) du manchon (6) sur l'optique de soudage (2) du poste de soudure un bras (25) se prolongeant jusque sous le manchon (6), sur l'extrémité libre duquel est logé un bras pivotant (22) de telle sorte qu'un rouleau (20) librement pivotant à l'extrémité libre de ce bras ou un manchon (26) en sifflet se trouvent sous la zone de pression du manchon (6) et le bras pivotant (22) est écarté de la pièce d'oeuvre (19) contre l'effet d'un ressort ou appuyé contre celle-ci (19) par l'intermédiaire d'un ressort.

5. Dispositif presseur déplaçable selon la revendication 4,
**caractérisé en ce**
**qu'**est disposé sur l'extrémité du bras pivotant (22) opposée au rouleau (20) ou au manchon en sifflet (26) un vérin hydraulique ou un cylindre de travail pneumatique qui peut être actionné de telle sorte à écarter le bras pivotant (22) de la pièce d'oeuvre (19) ou alors à presser le rouleau (20) ou le manchon en sifflet (26) sur la pièce d'oeuvre (19).

6. Dispositif presseur déplaçable selon les revendications 1 à 5,
**caractérisé en ce que**
les manchons (6 ;26) et les rouleaux (20) sont composés d'un cuproalliage dur.

7. Dispositif presseur déplaçable selon les revendications 1 à 6,
**caractérisé en ce que**
débouche dans le manchon (6) une conduite d'amenée pour gaz protecteur.

8. Dispositif presseur déplaçable selon la revendication 1,
**caractérisé en ce**
**qu'**avec plusieurs tôles (32 ;33 ;34) de sections similaires à une bride et dont les extrémités sont approximativement de même longueur, deux lames (36 ;37 ;41 ;42) disposées avec l'intervalle correspondant à l'épaisseur moyenne (33) de la tôle sont entraînées avec le faisceau de soudage (9) et peuvent être enfoncées simultanément entre les extrémités libres des tôles (32 ;33 ;34).

9. Dispositif presseur déplaçable selon la revendication 8,
**caractérisé en ce que**
les deux lames sont configurées comme un rouleau à lame (35) logé librement pivotant dans une fourche palier (30), lequel est pourvu sur sa surface d'enveloppe de deux lames cunéiformes (36 ;37) tournant parallèlement l'une à l'autre dont les pointes présentent entre elles un écart correspondant approximativement à l'épaisseur de la tôle moyenne (33).

10. Dispositif presseur déplaçable selon la revendication 8,
**caractérisé en ce que**
les deux lames sont configurées comme un porte-lames (38) pouvant être serré dans un logement (39) monté élastique sur le bras (31), porte-lames dont les lames (41 ;42) sont en forme de coin, droites et parallèles entre elles et leurs pointes présentent entre elles un écart correspondant approximativement à l'épaisseur de la tôle moyenne (33).

11. Dispositif presseur déplaçable selon les revendications 8 et 10,
**caractérisé en ce que**
les lames (41 ;42) sont arrondies sur leurs faces avant.

12. Dispositif presseur déplaçable selon les revendications 8 à 11,
**caractérisé en ce que**
l'angle de coupe intérieur est compris entre 5 et 15 degrés.
